# EUROPEAN PATENT APPLICATION

(11) **EP 2 028 707 A2**
(43) Date of publication of application: **25.02.2009**
(21) Application number: 08157924.5
(22) Date of filing: 10.06.2008
(51) Int. Cl.: H01M 8/02, H01M 8/12, H01M 8/24, C03C 10/00

(54) **Glass Seal with Ceramic Fiber for a Solid Oxide Fuel Cell Stack**

(30) Priority: 29.06.2007 US 824345
(71) Applicant: Delphi Technologies, Inc., Troy, Michigan 48007 (US)
(72) Inventor: Mukerjee, Subhasish, Pittsford, NY 14534 (US); Haltiner Jr., Karl J., Fairport, NY 14450 (US); De Rose, Anthony J., Rochester, MI 14612 (US); Maczynski, Stefan M., Canadaigua, NY 14424 (US); Fleming, Carolyn D., Lima, NY 14485 (US); Bosch, Russel H., Gaines, MI 48436 (US)
(74) Representative: Denton, Michael John

(57) **Abstract**

A glass ceramic composition for sealing adjacent metal cassettes in an SOFC stack. The seal composition comprises an alumina-silicate glass ceramic matrix and a ceramic fiber aggregate dispersed in the matrix. Preferably, the fiber is selected from the group consisting of zirconium oxide fiber, alumina fiber, and combinations thereof. Preferably, the fiber is present at 1-60 weight percent with respect to the weight of glass ceramic, preferably about 30 weight percent. Preferably, the zirconia is stabilized by up to about 10% yttria. Alumina fiber may substitute for a portion of the zirconia fiber. Preferably, a green seal is die cut from a green tape sheet formed by extrusion of a slurry comprising water and a latex binder. The green seal is sintered during the final SOFC stack assembly process to form the final stack seal.

## Description

### TECHNICAL FIELD

The present invention relates to solid oxide fuel cell (SOFC) stacks; more particularly, to seals for connecting adjacent fuel cell cassettes in an SOFC stack; and most particularly, to an improved glass seal incorporating ceramic fiber to increase resistance to cracking during thermal cycling of the stack in use.

### BACKGROUND OF THE INVENTION

In practical fuel cell systems, the output of a single fuel cell is typically less than one volt, so connecting multiple cells in series is required to achieve useful operating voltages. Typically, a plurality of fuel cells are mechanically stacked up in a "stack" and are electrically connected in series from the anode of one cell to the cathode of an adjacent cell via intermediate stack elements known in the art as interconnects.

A solid oxide fuel cell (SOFC) comprises a cathode layer, an electrolyte layer formed of a solid oxide and bonded to the cathode layer, and an anode layer bonded to the electrolyte layer on a side opposite from the cathode layer. In use of the cell, air is passed over the surface of the cathode layer, and oxygen from the air migrates through the electrolyte layer and reacts in the anode with hydrogen being passed over the anode surface to form water, thereby creating an electrical potential between the anode and the cathode of about 1 volt. Typically, each individual fuel cell is mounted, for handling, protection, and assembly into a stack, within a metal frame referred to in the art as a "picture frame", to form a "cell-picture frame assembly".

To facilitate formation of a stack of fuel cells wherein the voltage formed is a multiple of the number of fuel cells in the stack, connected in series, a known intermediate process joins together a cell-picture frame assembly with a metal separator plate and an anode interconnect to form an intermediate structure known in the art as a fuel cell cassette subassembly ("cassette"). The thin sheet metal separator plate is stamped and formed to provide, when joined to the mating cell frame and anode spacers, a flow space for the anode gas. Typically, the separator plate is formed of ferritic stainless steel for low cost.

In forming the stack, the cell-picture frame assembly of each cassette subassembly is sealed to the perimeter of the metal separator plate of the adjacent cassette to form a cathode air flow space and to seal the feed and exhaust passages for air and hydrogen against cross-leaking or leaking to the outside of the stack.

SOFCs operate at temperatures of 500°C to 1000°C, and a known challenge in the art is providing cassette-to-cassette seals that can survive repeated vibration, shock, and thermal cycling between ambient and operating temperatures. Prior art glass or glass-ceramic seals show porosity and micro-cracks that propagate with increasing numbers of thermal cycles of an SOFC stack in use and eventually cause unacceptable leakage.

It is known to provide glass for SOFC seals wherein the coefficient of thermal expansion (CTE) approximates that of the materials to be bonded. US Patent No. 6,430,966 B1 discloses a tri-metallic glass ceramic of the general formula M_{A}O-M_{B}O_{Y}-SiO₂ wherein M_{A} is selected from the group consisting of barium, strontium, calcium, or a combination thereof, and M_{B}O_{Y} is selected from the group consisting of Al₂O₃, B₂O₃, P₂O₅, GaO, PbO, and combinations thereof and contains over 5% Al₂O₃. Such glasses are disclosed to be useful in bonding ceramic surfaces of ceramic SOFC assemblies. However, they do not provide a similar benefit to the bonding of metals having CTEs significantly different from those of ceramics, as is required in a fuel cell stack formed from metallic cassettes and disclosed in the present invention.

It is also known to formulate glass for SOFC seals that is loaded with minute disk-like, hexagonally shaped platelets of alumina and/or zirconia to provide an aggregate reinforcement of the glass matrix against cracking. The disk-shaped platelets disclosed have a diameter/thickness ratio of greater than 10/1. See, S.R. Choi and N.P. Bansal, "Mechanical Properties of SOFC Seal Glass Composites," *Ceram. Eng.Sci. Proc.,* **26** (2005). Lastly, it is known to formulate glass for SOFC seals that is loaded with low levels (i.e., 8%) of zirconia-based ceramic fibers, see U.S. Published Patent Application 2006/0060633. However, glass seal materials with such low loading levels can be susceptible to porosity and/or crystallization in the glass matrix

What is needed in the art is a seal material that provides a mechanically robust joint between adjacent metal fuel cell cassettes that will endure vibration, shock, and thermal cycling.

It is a principal object of the present invention to increase the reliability and durability of an SOFC system.

### SUMMARY OF THE INVENTION

Briefly described, a glass ceramic seal composition for sealing adjacent metal cassettes in an SOFC stack comprises an alumina-silicate glass matrix and a fiber aggregate dispersed in the matrix. Preferably, the fiber is selected from the group consisting of zirconium oxide fiber, alumina fiber, and combinations thereof. Preferably, the fiber is 1-60 weight percent with respect to the weight of glass ceramic, preferably about 30 weight percent. Preferably, the zirconia is stabilized by up to about 10% yttria. Alumina fiber may substitute for a portion of the zirconia fiber. Preferably, the seal is die cut from a green tape sheet formed by extrusion of a slurry comprising water and a latex binder. The green seal is sintered during the final SOFC stack assembly process to form the final stack seal.

### BRIEF DESCRIPTION OF THE DRAWINGS

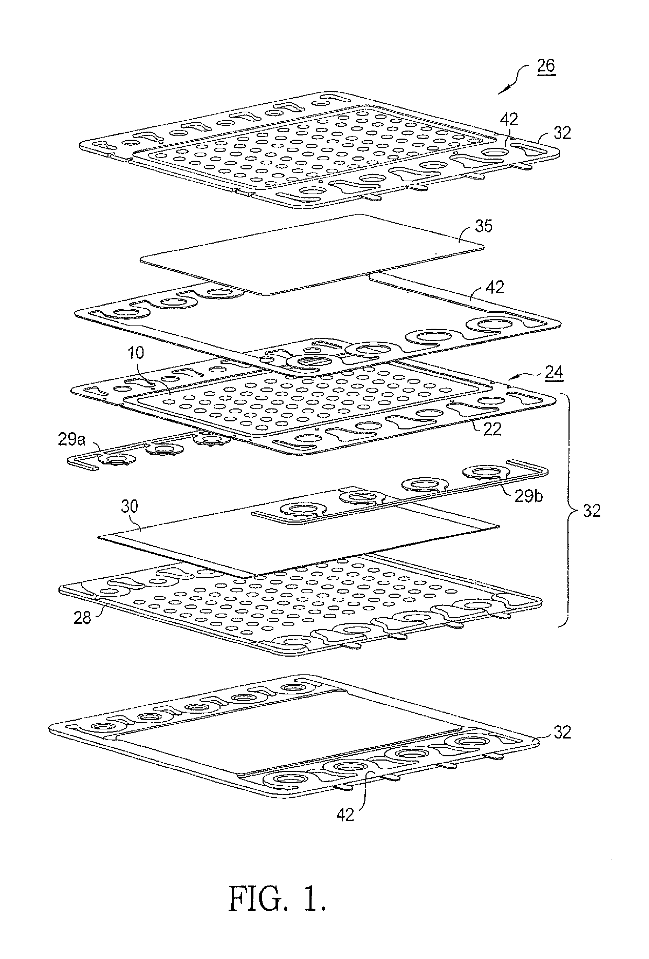

The present invention will now be described, by way of example, with reference to the accompanying drawing, in which FIG. 1 is a exploded isometric view showing three fuel cell cassettes in an SOFC fuel cell stack, wherein the middle exploded cassette incorporates a seal formed of an improved glass ceramic composition in accordance with the invention.

The exemplification set out herein illustrates one preferred embodiment of the invention, in one form, and such exemplification is not to be construed as limiting the scope of the invention in any manner.

### DESCRIPTION OF THE PREFERRED EMBODIMENTS

Referring to FIG. 1, an SOFC fuel cell 10 comprises a cathode layer, an electrolyte layer formed of a solid oxide and bonded to the cathode layer, and an anode layer bonded to the electrolyte layer on a side opposite from the cathode layer. In a presently preferred embodiment, for handling, protection, and assembly into a stack, fuel cell 10 is mounted within a metal frame 22 referred to in the art as a "picture frame", to form a "cell-picture frame assembly" 24.

To facilitate formation of a stack 26 of fuel cells wherein the voltage formed is a multiple of the number of fuel cells in the stack connected in series, a presently-preferred intermediate process joins together a cell-picture frame assembly 24 with a separator plate 28, anode spacers 29a,29b, and an anode interconnect 30 to form an intermediate structure known as a fuel cell cassette subassembly 32 ("cassette"). The thin sheet metal separator plate 28 is stamped and formed to provide a flow space for the anode gas. A cathode interconnect 35, installed during final assembly against the cathode surface and between adjacent cassette subassemblies, provides a cathode air flow space.

During the final stack assembly process, a perimeter seal 42 is inserted between adjacent of the cassettes 32, and the stack is brought to operating temperature and allowed to settle to its final form. At elevated temperature, the separator plate and cell frame deforms, providing a compliant assembly, until the cells and interconnects are resting on one another, under load, which prevents further motion. The glass in the seal composition softens, conforms, and bonds to the metal cassette surfaces.

In accordance with the present invention, perimeter seal 42 is formed of a glass ceramic matrix loaded with one or more types of ceramic fiber. As used herein, the term "fiber" means an acicular material having a length/diameter ratio greater than about 2/1, and "glass ceramic" means an alumino-silicate glass ceramic as is known in the art.

In a currently preferred embodiment, the seal material comprises a G18 glass ceramic matrix loaded with polycrystalline zirconia (zirconium oxide) fibers having a length between about 5µm and about 3.0 mm and a diameter between about 2µm and about 20µm (typically between 6µm and 10µm) and having a porosity between about 0% and about 95%. Such zirconia fibers are stabilized with about 10% yttria (Y₂O₃) and are commercially available from Zircar Zirconia, Inc., Florida, NY, USA. A presently preferred zirconia/yttria fiber is Type ZYBF. In some applications it can be desirable to also include alumina (aluminum oxide) fibers, either alone or in mixture with the zirconia/yttria fibers. A presently preferred loading of fibers in the composition, by weight percent, is in the range of about 1 % to about 60% fiber with respect to the weight of glass ceramic, a preferred percentage being about 30%.

Referring still to FIG. 1, seal 42 may be formed by any convenient process, for example, by screen printing, extruding from a die, or tape casting a slurry (also known as a "slip") of finely-divided glass ceramic/fiber mixture. The slurry may be formed, for example, with a water base and/or an acrylic latex binder. Other volatile binders may also be incorporated, within the scope of the invention.

In a presently preferred process, glass ceramic seal 42 is tape-cast from a slip by a doctor blade applicator onto a suitable carrier film to form a "green" (non-cured) tape sheet having a thickness between about 4µm and about 400µm. A green seal is die-cut from the green sheet and inserted into the SOFC stack during assembly thereof. Preferably, the metal surfaces to be sealed have been alumina coated to enhance seal adhesion. During subsequent high-temperature sintering of the assembled stack, as is known in the art, the water and binders in the seal are driven off and the glass matrix is softened and compressed to conform and adhere to the adjacent metal cassette surfaces, thereby forming a substantially hermetic, robust seal.

The resulting seal is durable through repeated thermal cycling of the assembled SOFC stack. In a laboratory test comparing glass seals in accordance with the invention against prior art glass-only seals wherein an SOFC stack was operated in a full-use mode and a once-a-day thermal cycle between ambient temperature and 750°C, it was found that zirconia fiber-loaded seals survived at least 6 times more thermal cycles than prior art glass seals (with the cycling being continued beyond) with no indication of incipient or outright failure.

While the invention has been described by reference to various specific embodiments, it should be understood that numerous changes may be made within the spirit and scope of the inventive concepts described. Accordingly, it is intended that the invention not be limited to the described embodiments, but will have full scope defined by the language of the following claims.

## Claims

1. A composition for forming a gas seal against a metal component in a solid oxide fuel cell stack, comprising:
a) a matrix formed of an alumino-silicate glass ceramic; and
b) a ceramic fiber aggregate dispersed in said matrix, **characterized in that** said ceramic fiber aggregate is present in an amount of at least 30 weight percent, with respect to the combined weight of said alumino-silicate glass ceramic and said ceramic fiber aggregate.

2. A composition in accordance with Claim 1 wherein said fiber is selected from the group consisting of zirconium oxide fiber, alumina fiber, and combinations thereof.

3. A composition in accordance with Claim 1 wherein said zirconium oxide fiber includes yttrium oxide.

4. A composition in accordance with Claim 3 wherein said yttrium oxide is present in an amount up to 10% by weight of zirconium oxide.

5. A composition in accordance with Claim 1 wherein said fiber aggregate is present in an amount between 30% and 60% by weight with respect to the weight of said alumino-silicate glass matrix and said ceramic fiber aggregate.

6. A composition in accordance with Claim 1 wherein individual fibers in said fiber aggregate have a length/diameter ratio greater than 2.5.

7. A composition in accordance with Claim 6 wherein said length is between 5µm and 3.0 mm, and wherein said diameter is between 2µm and 20µm.

8. A composition in accordance with Claim 1 wherein said alumino-silicate glass ceramic is G18 glass ceramic.

9. A gas seal formed against a metal component in a solid oxide fuel cell stack, comprising:
a) a matrix formed of an alumino-silicate glass ceramic; and
b) a ceramic fiber aggregate dispersed in said matrix, **characterized in that** said ceramic fiber aggregate is present in an amount of at least 30 weight percent, with respect to the combined weight of said alumino-silicate glass ceramic and said ceramic fiber aggregate.

10. A gas seal in accordance with Claim 9 wherein said fiber is selected from the group consisting of zirconium oxide fiber, alumina fiber, and combinations thereof.

11. A solid oxide fuel cell stack assembly comprising a plurality of cassette subassemblies, wherein adjacent of said cassette subassemblies are mutually sealed against gas leakage by a gas seal formed of a composition including a matrix formed of an alumino-silicate glass ceramic and a fiber aggregate dispersed in said matrix, **characterized in that** said ceramic fiber aggregate is present in an amount of at least 30 weight percent, with respect to the combined weight of said alumino-silicate glass ceramic and said ceramic fiber aggregate.

12. An assembly in accordance with Claim 11 wherein said fiber is selected from the group consisting of zirconium oxide fiber, alumina fiber, and combinations thereof.

13. An assembly in accordance with Claim 11 wherein surfaces of said cassette subassemblies sealed against gas leakage by said composition are metallic.

14. An assembly in accordance with Claim 13 wherein said surfaces are coated with alumina before assembly of said gas seal composition thereto.
